# FASCICULE DE BREVET EUROPEEN

(11) **EP 0 993 167 B1**
(45) Date de publication et mention de la délivrance du brevet: **29.03.2006**
(21) Numéro de dépôt: 99402326.5
(22) Date de dépôt: 23.09.1999
(51) Int. Cl.: H04M 1/66, H04M 1/725

(54) **Procédé de protection d'un terminal de radiocommunication contre un usage non autorisé**
Schutzverfahren für Funkkommunikationsterminal gegen unbefugtem Gebrauch
Protection method for radiocommunication terminal against unauthorized use

(30) Priorité: 08.10.1998 FR 9812608
(43) Date de publication de la demande: 12.04.2000
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: Gabou, Ronan, 75009 Paris (FR); Marty, Xavier, 92400 Courbevoie (FR); Davenas, Luc, 92700 Colombes (FR)
(74) Mandataire: Feray, Valérie

(56) Documents cités:
- EP-A- 0 768 786
- GB-A- 2 234 883
- GB-A- 2 236 205
- GB-A- 2 304 001
- GB-A- 2 320 397
- US-A- 5 646 604

## Description

L'invention concerne un procédé de protection d'un terminal de radiocommunication contre un usage non autorisé ainsi qu'un terminal comportant des moyens pour la mise en oeuvre du procédé.

Par terminal de radiocommunication on entend plus précisément mais de manière non limitative les terminaux des téléphones sans fil de type PHS (pour « Personal Handy-Phone System » en anglais) ou DECT (pour « Digital European Cordless Telecommunications » en anglais) et les terminaux mobiles cellulaires de type GSM (pour « Global System for Mobile Communication » en anglais) ou CTS (pour « Cordless Téléphonie System » en anglais), mais également les terminaux de type à radio-messagerie (« Pager »).

L'invention s'applique aux terminaux destinés à émettre et recevoir une pluralité de types d'informations dites utilisateur et une pluralité de types d'informations dites terminal.

On entend par informations-utilisateur toute information transmise à l'initiative ou au bénéfice de l'utilisateur, telles que par les données vocales de communication, les messages courts ou SMS (Short Message Service), les appels d'urgence.

Par analogie, on entend par informations-terminal toute information transmise à l'initiative ou au bénéfice du terminal, telles que par exemple les signaux de localisation ou la puissance de la cellule courante et des cellules voisines.

Les terminaux de radiocommunication usuels possèdent des moyens de protection contre un usage non autorisé lorsqu'ils ne sont pas en fonctionnement. En effet il est prévu d'entrer un code dit « code PIN » connu uniquement des utilisateurs autorisés pour pouvoir mettre le terminal en fonctionnement. Ces moyens de protection concerne en fait l'utilisation de la carte SIM de l'utilisateur plutôt que le terminal lui-même.

Cependant il n'est pas prévu dans ces terminaux de l'art antérieur de les protéger contre un usage non autorisé lorsqu'ils sont en mode nominal. Ainsi lorsqu'un utilisateur a entré son code PIN pour mettre son terminal en fonctionnement mais qu'il ne l'utilise pas, il ne peut pas empêcher une autre personne de l'utiliser bien qu'elle ne connaisse pas ledit code PIN et qu'elle ne soit pas autorisée à le faire.

Le document GB-A-2 304 001 décrit un terminal mobile disposant d'un mode alarme en cas de perte d'un terminal qui, lorsqu'il est activé, permet d'empêcher une personne, sauf à ce que cette personne entre un code particulier, de recevoir des communications ou d'appeler un numéro autre que celui du propriétaire du téléphone, et ce, dès lors que le nombre d'appels émis depuis le terminal dépasse un certain seuil.

L'invention vise donc à palier les inconvénients précédemment mentionnés.

Selon un premier aspect, l'invention a donc pour objet un procédé de protection permettant de protéger un terminal de radiocommunication en mode nominal contre un usage non autorisé, le terminal étant apte à émettre et recevoir une pluralité de types d'informations-utilisateur transmises à l'initiative ou au bénéfice de l'utilisateur, et une pluralité de types d'informations-terminal, transmises à l'initiative ou au bénéfice du terminal.

À cet effet, lorsqu'aucun type d'informations-utilisateur n'est transmis, on commute automatiquement le terminal dans un mode sécurisé dans lequel on interdit J'émission d'au moins un type d'informations-utitisateur et on autorise l'émission d'au moins un type d'informations-terminal, l'annulation du mode sécurisé étant validée après l'entrée d'un code prédéterminé.

Le type d'informations-utilisateur dont on interdit l'émission correspond principalement aux données de communication. En revanche les types d'informations-terminal dont on autorise la réception correspond principalement aux appels entrant ou aux données de signalisation. Ainsi en mode sécurisé, le terminal peut recevoir des appels ou être localisé dans le réseau mais ne permet pas de passer un appel si l'utilisateur ne connaît pas le code prédéterminé.

Suivant un mode de réalisation, on désactive l'écran du terminal lorsqu'il est en mode sécurisé. Cette caractéristique permet de réduire la consommation en énergie du terminal. Cette réduction de consommation est d'autant plus importante que l'écran est grand. Ce mode de réalisation est donc particulièrement intéressant pour les terminaux à large écran graphique.

Suivant un autre mode de réalisation et compte tenu des obligations de normalisation, on autorise, en mode sécurisé, l'émission d'informations-utilisateur de type appels d'urgence.

Selon un deuxième aspect, l'invention propose un terminal de radiocommunication apte à émettre et recevoir une pluralité de types d'informations- utilisateur transmises à l'initiative ou au bénéfice de l'utilisateur, et une pluralité de types d'informations-terminal, transmises à l'initiative ou au bénéfice du terminal.

Selon l'invention le terminal comporte des moyens de protection contre un usage non autorisé pour la mise en oeuvre du procédé tel que décrit précédemment, les moyens de protection comprenant :
- des moyens pour commuter le terminal automatiquement dans un mode sécurisé dans lequel l'émission d'au moins un type d'informations-utilisateur est interdite et l'émission d'au moins un type d'informations-terminal est autorisée, et
- des moyens d'annulation du mode sécurisé.

D'autres caractéristiques de l'invention sont explicitées de manière non limitative dans la description qui suit de modes de réalisation donnés uniquement à titre d'exemple en référence aux figures annexées.

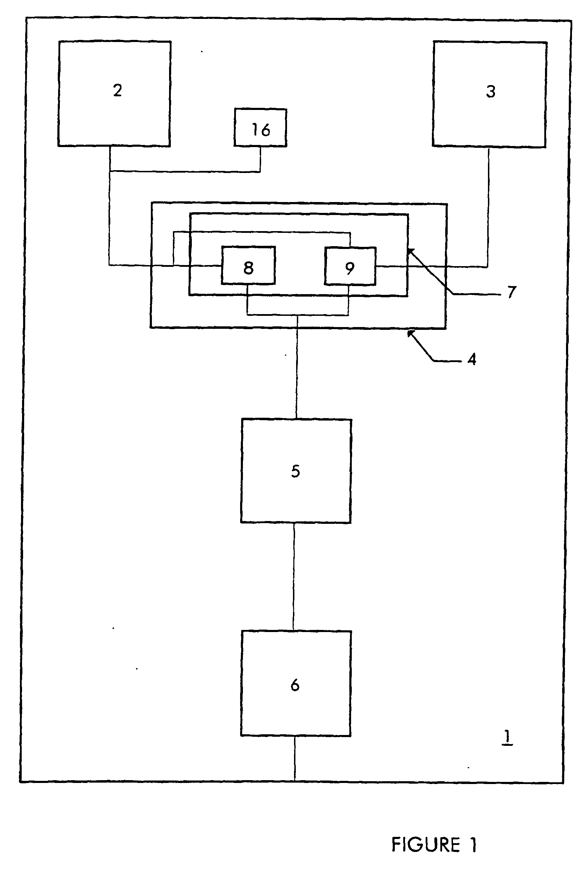

La figure 1 est un schéma bloc des différentes couches fonctionnelles d'un terminal de radiocommunication utilisées pour mettre en oeuvre le procédé selon l'invention.

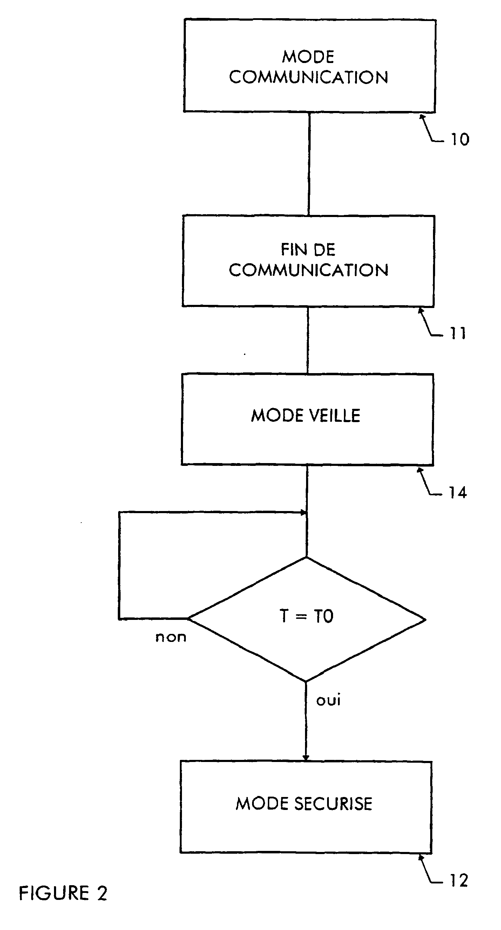

La figure 2 est un diagramme des étapes du procédé de protection selon l'invention lors du passage au mode sécurisé.

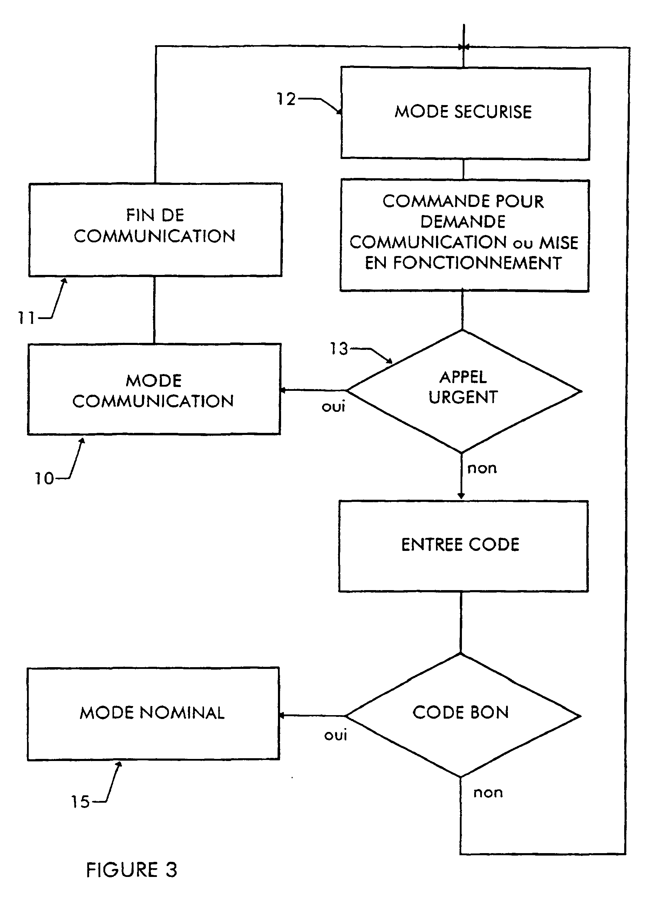

La figure 3 est un diagramme des étapes du procédé de protection selon l'invention lors du passage du mode sécurisé à un autre mode.

La description qui va suivre du procédé selon l'invention s'applique à un terminal de radiocommunication de type GSM. Bien entendu le procédé peut s'appliquer à tout autre type de terminal de radiocommunication comportant des moyens fonctionnels semblables permettant de mettre en oeuvre les différentes étapes du procédé.

En outre seuls les éléments du terminal utilisés pour le procédé seront décrits dans la suite. Les autres parties du terminal nécessaires à son fonctionnement sont connues de l'homme du métier et ne seront pas décrites en détail.

Le terminal de radiocommunication 1 comporte un écran 2 et un clavier 3 reliés tout deux à des moyens de gestion 4.

Les moyens de gestion 4 sont reliés à un système d'exploitation 5 dit système d'exploitation RHM, lui-même relié à des moyens 6 pour la mise en oeuvre du protocole GSM autrement appelés couches protocolaires GSM.

Les moyens 4, 5 et 6 permettent de gérer les informations reçues ou émises par le terminal, ces informations pouvant être des informations-utilisateur ou des informations-terminal telles que décrites plus haut.

Lorsque le terminal est en fonctionnement, usuellement il passe en mode veille si il n'est pas utilisé de manière à 'économiser de l'énergie. Cependant dans ce mode veille, le terminal peut être réutilisé à tout moment sans qu'il n'y ait de protection particulière. Ainsi l'utilisateur ou tout autre personne peut utiliser le terminal pour prendre un appel mais également pour téléphoner ou transmettre des messages tels que les message courts par exemple. En fait lorsque le terminal est en mode veille, il est accessible et n'importe quelle personne peut utiliser la majorité de ses fonctions même si elle n'y a pas été autorisée.

Pour empêcher une personne non autorisée d'utiliser le terminal 1, les moyens de gestion 4 comportent, selon l'invention, des moyens de protection 7 du terminal contre un usage non autorisé. Ces moyens de protection ont pour objectif d'empêcher un usage non autorisé du terminal tout en maintenant son fonctionnement opérationnel.

A cet effet, les moyens de protection 7 comportent :
- des moyens de commutation 8 pour commuter le terminal automatiquement dans un mode sécurisé dans lequel l'émission d'au moins un type d'informations-utilisateur est interdite et l'émission d'au moins un type d'informations-terminal est autorisée ; ces moyens de commutation 8 sont reliés d'une part à l'écran 2 et d'autre part au système d'exploitation 5, et
- des moyens d'annulation 9 du mode sécurisé, reliés d'une part à l'écran 2 et au clavier 3 et d'autre part également au système d'exploitation 5.

Il est rappelé que l'on entend par informations-utilisateur toute information transmise à l'initiative ou au bénéfice de l'utilisateur.

Ainsi des appels sortant qui sont considérés comme des informations-utilisateur ne pourront pas être émis tant que le terminal est en mode sécurisé.

En revanche il est indispensable de maintenir le fonctionnement potentiel du terminal et notamment de faire en sorte qu'il soit toujours en contact avec une station de base du réseau pour qu'il puisse recevoir des informations.

C'est la raison pour laquelle le terminal peut émettre des informations-terminal telles que notamment des informations de signalisation.

Il est rappelé également que l'on entend par informations-terminal toute information transmise à l'initiative ou au bénéfice du terminal.

Selon invention, l'annulation du mode sécurisé est validée après l'entrée d'un code prédéterminé.

Concrètement dans le procédé selon l'invention plusieurs situations peuvent se présenter:

Si le terminal est en mode communication 10, une étape de détection 11 permet de détecter une information de fin de communication émise par celui que coupe la communication, à savoir le réseau ou l'utilisateur.

Quand la communication est terminée, l'information de fin de communication est transmise aux moyens de commutation 8.

Suivant un premier mode de réalisation les moyens de commutation 8 commutent automatiquement et instantanément le terminal en mode sécurisé 12.

Ce mode de réalisation peut être appliqué notamment si on prévoit d'autoriser, pour des raisons évidentes de sécurité, à toute personne autorisé ou non, l'émission d'appel d'urgence 13.

Usuellement à ces appels d'urgence sont attribués des numéros standard que le réseau GSM pourra identifier comme tel.

Par conséquent il suffit de configurer les moyens d'annulation 9 de telle sorte qu'ils soient actifs non seulement lorsque le code est saisi mais également lorsque c'est le numéro d'un appel d'urgence.

Cependant lorsque la communication est terminée, le terminal repasse automatiquement et instantanément dans le mode sécurisé 12, pour ne pas donner la possibilité à une personne non autorisée de réutiliser le terminal pour l'émission d'informations-utilisateur autres que l'appel d'urgence.

On peut bien entendu prévoir d'interdire l'émission de tous les types d'informations-utilisateur.

On peut également prévoir de repasser instantanément en mode sécurisé quelle que soit l'information-utilisateur émise auparavant.

Suivant un deuxième mode de réalisation le terminal passe tout d'abord en mode veille 14 et les moyens de commutation 8 commutent le terminal en mode sécurisé après une temporisation prédéterminée T0.

Ce mode de réalisation peut être un choix de l'utilisateur pour lui éviter de devoir saisir son code à chaque fois et notamment lorsqu'il a plusieurs informations-utilisateur à émettre successivement, par exemple plusieurs appels sortant et/ou plusieurs messages courts.

Considérons maintenant que le terminal est en mode sécurisé 12.

Pour revenir au mode nominal 15 il suffit de saisir le code prédéterminé, qui est transmis aux moyens d'annulation 9 qui provoquent la commutation du terminal.

En revanche lorsque le terminal reçoit une information-utilisateur de type appel entrant plusieurs solutions peuvent être mises en oeuvre.

Suivant une première variante de réalisation, le terminal est commuté en mode communication 10 mais repasse automatiquement et instantanément en mode sécurisé 12 en fin de communication.

Suivant une deuxième variante, le terminal n'est pas commuté en mode communication 10 et bascule en messagerie, la consultation de la messagerie étant conditionnée par l'entrée du code prédéterminé.

Suivant un troisième mode de réalisation, on signale à l'utilisateur l'arrivée de l'appel pour qu'il saisisse son code et prenne la communication. On peut également prévoir qu'après une durée prédéterminée le terminal bascule en messagerie si le code n'a pas été saisi.

Lorsque l'information-utilisateur est du type message court, les étapes du procédé de réception sont semblables à celles du mode veille mais le terminal peut être maintenu en mode sécurisé en fonction de la nature du message court.

En effet de manière connue les message courts peuvent être de plusieurs types (classe 0, classe 1, classe 2, etc). Parmi ces types, et conformément à la norme, certains sont affichés automatiquement sur l'écran de sorte que l'utilisateur soit informé instantanément.

Pour ce type de message court on prévoit de maintenir le terminal en mode sécurisé tout en affichant ledit message. Ainsi la condition de sécurité requise est garantie.

En revanche pour les autres types de message court qui ne nécessitent pas d'être affichés automatiquement, le terminal est également maintenu en mode sécurisé mais la consultation des message reçus est conditionnée par la saisie du code de l'utilisateur autorisé.

Enfin pour augmenter l'économie d'énergie, on peut prévoir de désactiver l'écran 2 du terminal lorsque ce dernier est en mode sécurisé. Les fonctions précédemment décrites sont maintenues actives et l'écran 2 est activé dès que cela est nécessaire et notamment pour l'affichage d'icônes de réception de messages.

Suivant une variante on peut prévoir de le maintenir désactivé même lors de la réception de messages, l'utilisateur étant informé de l'arrivée de message soit par un indicateur sonore soit lorsqu'il décide de faire commuter son terminal en mode nominal 15.

Suivant un autre mode de réalisation, le terminal comporte des moyens de signalisation 16 du mode sécurisé, permettant de distinguer le mode arrêt du terminal du mode sécurisé, notamment dans le cas où l'écran du terminal est désactivé.

Ces moyens de signalisation peuvent être notamment la diode électroluminescente utilisée de manière connue de l'homme du métier pour la signalisation de connexion au réseau.

## Revendications

1. Procédé de protection d'un terminal de radiocommunication contre un usage non autorisé, le terminal étant apte à émettre et recevoir une pluralité de types d'informatîons-dites utilisateur transmises à l'initiative ou au bénéfice de l'utilisateur, et une pluralité de types d'informations terminal transmises à l'initiative ou au bénéfice du terminal,
**caractérisé en ce que** lorsqu'aucun type d'informations-utilisateur n'est transmis, on commute automatiquement le terminal dans un mode sécurisé dans lequel on interdit l'émission d'au moins un type d'informations-utilisateur et on autorise l'émission d'au moins un type d'infarmations-terminal, rannulation du mode sécurisé étant validée après l'entrée d'un code prédéterminé.

2. Procédé selon la revendication 1 **caractérisé en ce que** la commutation automatique dans le mode sécurisé est effectuée après une temporisation prédéterminée.

3. Procédé selon la revendication 1 ou 2, le terminal de radiocommunication comportant un écran, **caractérisé en ce qu'**en mode sécurisé, on désactive l'écran du terminal.

4. Procédé selon l'une quelconque des revendications précédentes, **caractérisé en ce que** lorsque le terminal reçoit un appel alors qu'il est en mode sécurisé, on autorise la communication, la nouvelle commutation dans le mode sécurisé étant effectuée instantanément à la fin de la communication.

5. Procédé selon l'une quelconque des revendications précédentes, **caractérisé en ce que** lorsque le terminal reçoit une information-utilisateur du type message court alors qu'il est en mode sécurisé, on maintient le terminal en mode sécurisé.

6. Procédé selon la revendication 5, **caractérisé en ce que** l'on affiche le message court reçu tout en maintenant le terminal en mode sécurisé.

7. Procédé selon la revendication 5, **caractérisé en ce que** l'on mémorise le message court tout en maintenant le terminal en mode sécurisé, l'écran du terminal est maintenu désactivé.

8. Procédé selon l'une quelconque des revendications 1 à 7, **caractérisé en ce qu'**en mode sécurisé, on interdit l'émission de tous les types d'informations-utilisateur.

9. Procédé selon l'une quelconque des revendications 1 à 7, **caractérisé en ce qu'**en mode sécurisé, on autorise l'émission d'informations-utitisateur de type appels d'urgence.

10. Terminal de radiocommunication apte à émettre et recevoir une pluralité de types d'informations- utilisateur transmises à l'initiative ou au bénéfice de l'utilisateur, et une pluralité de types d'informations- terminal transmises à l'initiative ou au bénéfice du terminal, **caractérisé en ce qu'**il comporte des moyens de protection contre un usage non autorisé pour la mise en oeuvre du procédé selon l'une quelconque des revendications précédentes, les moyens de protection comprenant:
- des moyens pour commuter le terminal automatiquement dans un mode sécurisé dans lequel l'émission d'au moins un type d'Informations-utilisateur est interdite et l'émission d'au moins un type d'informations-terminal est autorisée, et
- des moyens d'annulation du mode sécurisé.

11. Terminal selon la revendication 10, **caractérisé en ce que** les moyens d'annulation sont activés par l'entrée d'un code prédéterminé.

## Patentansprüche

1. Verfahren zum Schützen eines Funkkommunikations-Endgeräts vor einer nicht erlaubten Nutzung, wobei das Endgerät so beschaffen ist, dass es mehrere Typen von Anwenderinformationen, die auf Initiative oder zum Nutzen des Anwenders gesendet werden, und mehrere Typen von Endgerätinformationen, die auf Initiative oder zum Nutzen des Endgeräts gesendet werden, aussendet und empfängt,
**dadurch gekennzeichnet, dass** das Endgerät dann, wenn kein Typ von Anwenderinformationen gesendet wird, automatisch in eine gesicherte Betriebsart umgeschaltet wird, in der das Aussenden wenigstens eines Typs von Anwenderinformationen untersagt ist und das Aussenden wenigstens eines Typs von Endgerätinformationen erlaubt ist, wobei die Annullierung der gesicherten Betriebsart nach der Eingabe eines vorgegebenen Codes validiert wird.

2. Verfahren nach Anspruch 1, **dadurch gekennzeichnet, dass** das automatische umschalten in die gesicherte Betriebsart nach einer vorgegebenen verzögerung ausgeführt wird.

3. Verfahren nach Anspruch 1 oder 2, bei dem das Funkkommunikations-Endgerät einen Bildschirm aufweist, **dadurch gekennzeichnet, dass** in der gesicherten Betriebsart der Bildschirm des Endgeräts deaktiviert wird.

4. Verfahren nach einem der vorhergehenden Ansprüche, **dadurch gekennzeichnet, dass** dann, wenn das Endgerät einen Anruf empfängt, während es sich in der gesicherten Betriebsart befindet, die Kommunikation erlaubt wird, wobei das erneute Umschalten in die gesicherte Betriebsart sofort am Ende der Kommunikation ausgeführt wird.

5. Verfahren nach einem der vorhergehenden Ansprüche, **dadurch gekennzeichnet, dass** das Endgerät dann, wenn es Anwenderinformationen des Kurznachrichtentyps empfängt, wenn es sich in der gesicherten Betriebsart befindet, in der gesicherten Betriebsart gehalten wird.

6. Verfahren nach Anspruch 5, **dadurch gekennzeichnet, dass** die empfangene Kurznachricht angezeigt wird und das Endgerät dabei in der gesicherten Betriebsart gehalten wird.

7. Verfahren nach Anspruch 5, **dadurch gekennzeichnet, dass** die Kurznachricht gespeichert wird und dabei das Endgerät in der gesicherten Betriebsart gehalten wird, wobei der Bildschirm des Endgeräts deaktiviert gehalten wird.

8. Verfahren nach einem der Ansprüche 1 bis 7, **dadurch gekennzeichnet, dass** in der gesicherten Betriebsart das Aussenden sämtlicher Typen von Anwenderinformationen untersagt ist.

9. Verfahren nach einem der Ansprüche 1 bis 7, **dadurch gekennzeichnet, dass** in der gesicherten Betriebsart das Aussenden von Anwenderinformationen des Typs Notruf erlaubt ist.

10. Funkkommunikations-Endgerät, das mehrere Typen von Anwenderinformationen, die auf Initiative oder zum Nutzen des Anwenders gesendet werden, und mehrere Typen von Endgerätinformationen, die auf Initiative oder zum Nutzen des Endgeräts gesendet werden, aussendet und empfängt, **dadurch gekennzeichnet, dass** es Mittel zum Schützen vor einer nicht erlaubten Nutzung enthält, die das Verfahren nach einem der vorhergehenden Ansprüche ausführen, wobei die Schutzmittel umfassen:
- Mittel zum automatischen umschalten des Endgeräts in eine gesicherte Betriebsart, in der das Aussenden wenigstens eines Typs von Anwenderinformationen untersagt ist und das Aussenden wenigstens eines Typs von Endgerätinformationen erlaubt ist, und
- Mittel zum Annullieren der gesicherten Betriebsart.

11. Endgerät nach Anspruch 10, **dadurch gekennzeichnet, dass** die Annullierungsmittel durch die Eingabe eines vorgegebenen Codes aktiviert werden.

## Claims

1. A method for protecting a radio communications terminal against unauthorized use, the terminal being capable of emitting and receiving a plurality of types of user information transmitted on the initiative or to the benefit of the user, and a plurality of types of terminal information transmitted on the initiative or to the benefit of the terminal,
**characterized in that**, when no type of user information is transmitted, the terminal is automatically switched to a secured mode wherein the emission of at least one type of user information is forbidden and the emission of at least one type of terminal information is authorized, cancelling of the secured mode being validated after entry of a predetermined code.

2. The method according to claim 1, **characterized in that** automatic switching to the secured mode is carried out after a predetermined timing.

3. The method according to claim 1 or 2, the radio communications terminal including a screen, **characterized in that** in the secured mode, the screen of the terminal is disabled.

4. The method according to any of the preceding claims, **characterized in that**, when the terminal receives a call when it is in the secured mode, the communication is authorized, the new switching to the secured mode being carried out at the end of the communication, instantaneously.

5. The method according to any of the preceding claims, **characterized in that**, when the terminal receives user information of the short message type while it is in the secured mode, the terminal is kept the secured mode.

6. The method according to claim 5, **characterized in that** the received short message is displayed while keeping the terminal in the secured mode.

7. The method according to claim 5, **characterized in that** the short message is stored while keeping the terminal in the secured mode, the screen of the terminal is kept disabled.

8. The method according to any of claims 1 to 7, **characterized in that** in the secured mode, emission of all the types of user information is forbidden.

9. The method according to any of claims 1 to 7, **characterized in that** in the secured mode, emission of user information of the emergency call type is authorized.

10. A radio communications terminal capable of emitting and receiving a plurality of types of user information transmitted on the initiative or to the benefit of the user and a plurality of types of terminal information transmitted on the initiative or to the benefit of the terminal, **characterized in that** it includes means for protection against unauthorized use, for applying the method according to any of the preceding claims, the protection means comprising:
- means for automatically switching the terminal to a secured mode wherein the emission of at least one type of user information is forbidden and the emission of at least one type of terminal information is authorized, and
- means for cancelling the secured mode.

11. The terminal according to claim 10, **characterized in that** the cancelling means are enabled by entering a predetermined code.
